# EUROPEAN PATENT APPLICATION

(11) **EP 1 865 213 A1**
(43) Date of publication of application: **12.12.2007**
(21) Application number: 07109175.5
(22) Date of filing: 30.05.2007
(51) Int. Cl.: F16C 11/06

(54) **Ball joint with controlled axial displacement**

(30) Priority: 31.05.2006 IT TO20060404
(71) Applicant: OCAP S.p.A., 10087 Valperga (Torino) (IT)
(72) Inventor: Tomas, Jean-Jacques, I-10072 CASELLE TORINESE (Torino) (IT)
(74) Representative: Rondano, Davide

(57) **Abstract**

The ball joint (10;110;210) comprises: a pin (12;112;212) provided at an end thereof with a head (14;114;214) having an outer surface (32;132;232); a socket (16;116;216) having an open cavity (18;118;218); and a shell (20;120;220) received in the cavity (18;118;218) of the socket (16;116;216). The shell (20;120;220) has an inner cavity into which the head (14;114;214) is inserted and which has an inner surface (22;122;222) the shape of which corresponds to that of the outer surface (32;132;232) of the head (14;114;214). The head (14;114;214), the cavity (18;118;218) of the socket (16;116;216) and the shell (20;120;220) are configured in such a manner that they allow a relative rotational movement between the head (14;114;214) and the socket (16;116;216) about an axis of whatever orientation. The axial stiffness of the ball joint (10;110;210) is independent from the radial stiffness, in particular lower than this latter, by either mounting the shell axially between two retaining elements the material of which is different to, in particular lower than that of the shell, or by providing a cylindrical inner cavity and a spherical outer surface of the shell, and a cylindrical outer surface of the shell, and a cylindrical outer surface of the head being force fitted in the shell.

## Description

The present invention relates to a ball joint, particularly intended for use on a motor vehicle, according to the preamble of Claim 1.

A known example of a ball joint for a motor vehicle is illustrated in Figure 8 of the attached drawings. With reference to Figure 8, the ball joint is generally indicated 10 and basically comprises a metal pin 12 provided at one end thereof with a ball head 14, usually formed as a single piece with the pin, a metal socket 16 having an open cavity 18 and a plastics shell 20 fitted in the open cavity 18 of the socket 16 and defining a spherical seat 22 in which the ball head 14 engages. The shell 20 is held inside the cavity 18 of the socket 16 by means of a locking washer 24, which in its turn is secured to the socket 16 by means of a retaining lip 26 obtained by plastically bending an upper edge of the socket 16. The locking washer 24 may be annular or, as in the exemplary embodiment shown in Figure 8, form a lip 28 which projects from the socket 16 in the assembled condition and acts as stop member for a protection guard 30. In the case of a locking washer of annular shape, a circumferential groove is usually provided on the outer surface of the socket 16 for securing the protection guard to the socket 16.

As the stiffness of the ball joint 10 is defined as the ratio of the load applied on the head 14 to the relative displacement between the head 14 and the socket 16 due to the applied load, when the ball joint 10 is subjected to a radial or axial load the stiffness of the ball joint is essentially determined by the geometry, the dimensional precision of the components, and above all by the elasticity of the plastics material of which the shell 16 is made. In some applications, the unit in which the ball joint is fitted must have very tight assembly tolerances. However, very tight assembly tolerances result in a high stiffness of the whole unit and thus render this latter very sensitive to the preloads and to the deformations caused by dimensional errors and thermal expansions in use.

It is therefore an object of the present invention to provide a ball joint which makes it possible to take up the permanent deformations produced during the running-in and the adjustment of the unit, and to take up the temporary deformations due to thermal expansions in use.

This and other objects are achieved according to the present invention by virtue of a ball joint as defined in the characterizing part of Claim 1.

Preferred embodiments of the invention are specified in the dependent claims.

In particular, since the pin has a hole suitable for receiving a link rod for connection to the unit in which the ball joint is fitted and this link rod can be locked in the desired axial position inside the hole by clamping means provided on the pin, the ball joint makes it possible to take up the whole machining and assembly tolerance chain of the unit in which it is fitted.

The characteristics and the advantages of the present invention will become clear from the following detailed description, given purely by way of non-limiting example with reference to the appended drawings, in which:
Figure 1 is an axial section view of a ball joint according to a first preferred embodiment of the invention;
Figure 2 is an exploded perspective view of the ball joint of Figure 1;
Figure 3 is an axial section view of a ball joint according to a second preferred embodiment of the invention;
Figure 4 is an exploded perspective view of the ball joint of Figure 3;
Figure 5 is an axial section view showing the socket of the ball joint of Figure 3 along with a fixture used during the step of machining the spherical surface of the inner cavity of the socket;
Figure 6 is an axial section view of a ball joint according to a third preferred embodiment of the invention;
Figure 7 is an exploded perspective view of the ball joint of Figure 6; and
Figure 8 is an axial section view of a ball joint according to the prior art.

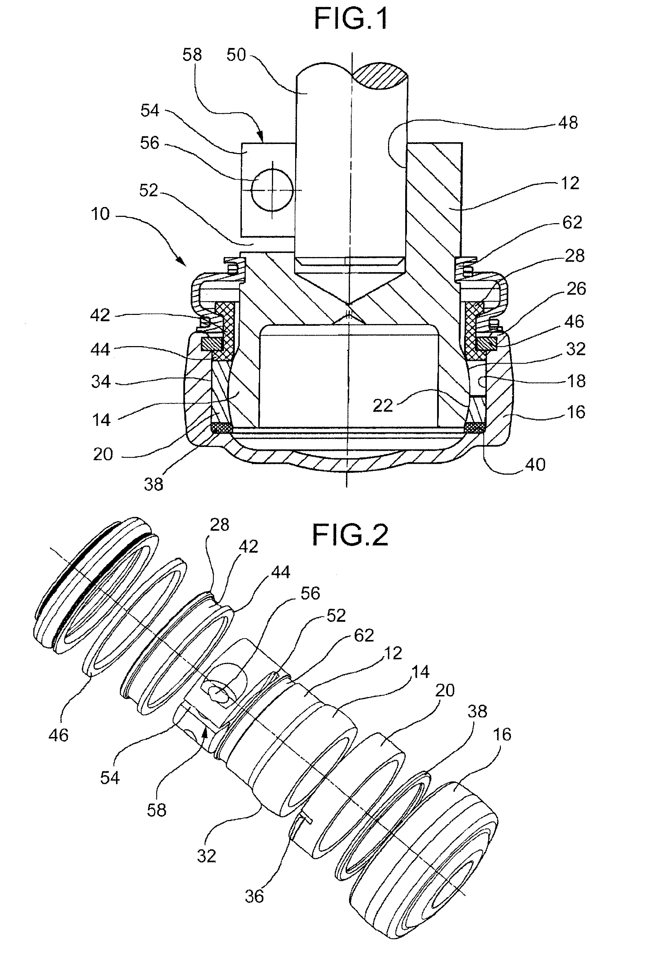

With reference first to Figures 1 and 2, in which parts and elements identical or corresponding to those of the ball joint of Figure 8 (prior art) have been given the same reference numerals, a ball joint 10 according to the present invention comprises a metal pin 12 provided at one end thereof with a head 14, preferably formed in a single piece with the pin, a metal socket 16 having an open cavity 18 and a shell 20 of rigid plastic material radially interposed between the head 14 and the socket 16.

The head 14 of the pin 12 has, at its end facing towards the socket 16, a glass- or cup-like configuration with an outer lateral surface 32 in the shape of a spherical sector, which for the sake of easiness will be referred to in the remaining part of the description and in the claims as spherical surface. The open cavity 18 of the socket 16 is defined by a cylindrical lateral surface. The shell 20 has a cylindrical outer lateral surface 34 coupled with the cylindrical surface of the cavity 18 of the socket 16, and an inner lateral surface 22 which defines a seat in the shape of a spherical sector (hereinafter referred to as spherical seat) and is coupled with the spherical surface 32 of the head 14.

In order to make the insertion of the head 14 of the pin 12 into the spherical seat 22 easier, the shell 20 preferably has a notch 36 which extends parallel to the axis of the shell half the height of this latter and allows a small radial expansion of the upper edge of the shell. A washer 38 made of a plastic material less rigid than the material of the shell 20 is interposed between the shell 20 and the socket 16. The washer 38 rests inferiorly on an annular abutment surface 40 formed at the bottom of the socket 16.

A bush 42 made of a plastic material less rigid than the material of the shell 20 is fitted in the socket 16 coaxially with the pin 12, and insists with a lower edge 44 thereof on the shell 20. The bush 42 is secured to the socket 16 by means of a locking ring 46 which axially retains the lower edge 44 of the bush 42. The locking ring is in its turn secured to the socket 16 by means of a retaining lip 26 obtained by plastically deforming an upper edge of the socket 16. The bush 42 advantageously has an upper lip 28 which in the assembled condition of the ball joint projects from the socket 16 and acts as a lower stop member for securing a protection guard 30 to the socket 16. The protection guard 30 is also secured to the pin 12 by engagement of an upper edge thereof in a circumferential groove 62 provided on the outer lateral surface of the pin 12.

According to a variant of embodiment (not illustrated) a washer axially interposed between the shell 20 and the locking ring 46 may be provided instead of the bush 42. In this case, a circumferential groove formed on the outer lateral surface of the socket 16 will be provided for securing the protection guard 30.

Upon bending of the retaining lip 26 by plastic deformation on the locking ring 46, a decoupling between the stiffnesses of the ball joint in the radial direction and in the axial direction is obtained. In fact, in the radial direction the interface between the head 14 and the socket 16 is formed by the shell 20 of rigid plastic material, whereas in the axial direction the interface between the head 14 and the socket 16 is formed by the lower washer 38 and by the bush 42 which are both made of a low-stiffness plastic material. When the ball joint 10 is subjected to a radial load, the assembly formed by the head 14 and by the shell 20 can thus axially slide inside the socket 16 as a result of the elastic deformation of the lower washer 38 and of the bush 42. Accordingly, the ball joint 10 has a stiffness under axial load which is much lower than the stiffness under radial load. By suitably selecting the plastic materials of the lower washer 38, of the bush 42 and of the shell 20, it is therefore possible, at the design stage, to set the axial and radial stiffness values required every time by the specific application.

The pin 12 has a coaxial cylindrical hole 48, preferably a blind hole, intended to receive a link rod 50. The pin 12 also has a transverse notch 52 extending about 180 degrees and a longitudinal notch 54 extending from the transverse notch 52 up to the upper free end of the pin 12. A transverse through hole 56 crossing the longitudinal notch 52 is also provided in the portion of the pin 12 surrounding the cylindrical hole 48. The two transverse and longitudinal notches 52 and 54 define a clamp portion 58 which can be tightened on the link rod 50 by insertion of a bolt (not shown) into the hole 56 to axially lock the link rod 50 in the cylindrical hole 48.

Since the link rod 50 can axially slide in the cylindrical hole 48 before being locked by tightening of the clamp portion 58 of the pin 12, it is possible to take up the whole machining and assembly tolerance chain of the unit in which the ball joint 10 is fitted.

On the other hand, the permanent deformations produced during the running-in and the adjustment of the unit in which the ball joint 10 is fitted and the temporary deformations due to the thermal expansions are absorbed by the axial displacement of the assembly formed by the shell 20 and the head 14 of the pin 12 inside the socket 16, in the travel range controlled by the elastic crushing of the lower washer 38 and of the bush 42.

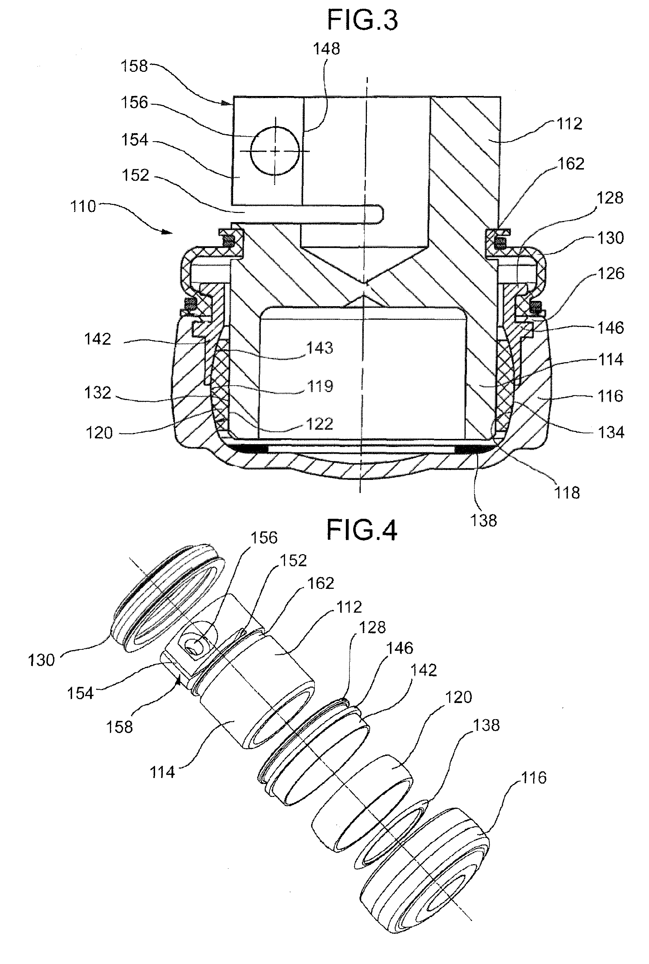

A second preferred embodiment of the present invention, as illustrated in Figures 3 and 4, in which parts and elements identical or corresponding to those of Figures 1 and 2 have been given the same reference numerals, increased by 100, will be described now.

With reference to Figures 3 and 4, a ball joint is generally indicated 110 and comprises a metal pin 112 provided at an end thereof with a head 114, preferably formed as a single piece with the pin, a metal socket 116 having an open cavity 118 and a shell 120 of rigid plastic material radially interposed between the head 114 and the socket 116.

At its end facing towards the socket 116, the head 114 of the pin 112 has a glass- or cup-like configuration with an outer lateral surface 132 of cylindrical shape. The open cavity 118 of the socket 116 has at its bottom an inner lateral surface 119 in the shape of a spherical sector. The shell 120 has an outer lateral surface 134 in the shape of a spherical sector coupled with the inner lateral surface 119 of the cavity 118, and an inner lateral surface 122 of cylindrical shape coupled with controlled interference with the cylindrical outer lateral surface 132 of the head 14.

A washer 138 made of a plastic material less rigid than the material of the shell 120 is mounted on the bottom of the socket 116. The washer 138 serves to avoid the direct contact between the head 114 and the socket 116 upon relative axial movement between these two components.

A bush 142 is mounted in the socket 116 coaxially with the pin 112. The bush 142 has at its bottom an inner lateral surface 143 in the shape of a spherical sector coupled with the upper portion of the outer lateral surface 134 of the shell 120.

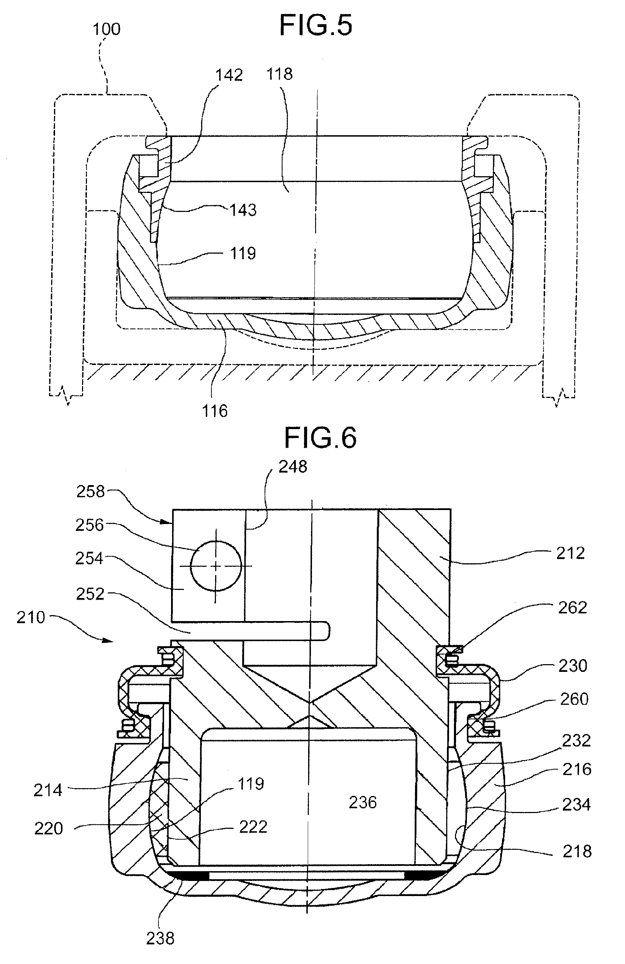

The spherical seat coupled with the assembly of the shell 120 and of the head 114 is therefore defined in this case by the surface 119 of the cavity 118 at its bottom and by the surface 143 of the bush 142 at its top. The two surfaces 119 and 143 are seamlessly arranged over each other and have the same curvature centre. In order to ensure that the two spherical surfaces 119 and 143 are correctly trued, the socket 116 and the bush 142 have to be simultaneously machined, preferably with the use of a special fixing fixture 100, illustrated in Figure 5, which allows to lock the bush 142 on the socket 116 during the machining. After the machining, the spherical surfaces 119 and 143 of the socket 116 and of the bush 142 have to be polished, for example by rolling, so as to achieve a sufficiently low surface roughness value.

After the machining of the spherical seat, the bush 142 is removed from the socket 116 so as to allow the insertion of the assembly formed by the shell 120 and by the head 114 into the cavity 118 of the socket 116. Upon insertion of the assembly formed by the shell 120 and by the head 114 into the cavity 118, also the bush 142 is inserted into the socket 116 and is secured thereto by plastically bending an upper edge 126 of the socket 116 over a retaining annular edge 146, preferably formed integrally with the bush 142.

Also in this case, the bush 142 advantageously has an upper lip 128 which in the assembled condition of the ball joint projects from the socket 116 and acts as a stop member for securing a protection guard 130 to the socket 216. According to a variant of embodiment (not illustrated), the protection guard 130 can engage in a groove provided on the outer lateral surface of the socket 116, rather than engaging with an upper lip formed by the bush 142. Moreover, the protection guard 130 is secured to the pin 112 by engagement of an upper edge thereof in a circumferential groove 162 provided on the outer lateral surface of the pin 112.

As in the first embodiment previously described, the pin 112 has a coaxial cylindrical hole 148, preferably a blind hole, intended to receive a link rod (not illustrated). The pin 112 also has a transverse notch 152 extending about 180 degrees and a longitudinal notch 154 extending from the transverse notch 152 up to the upper free end of the pin 112. A transverse through hole 156 crossing the longitudinal notch 152 is also provided in the portion of the pin 112 surrounding the cylindrical hole 148. The two transverse and longitudinal holes 152 and 154 form a clamp portion 158 which can be tightened on the link rod by insertion of a bolt (not shown) into the hole 156 to axially lock the link rod in the cylindrical hole 148.

Also in this case, the behaviour of the ball joint 110 under radial load and the one under axial load are independent and very different from each other.

In fact, in the radial direction the interface between the head 114 and the socket 116 is formed by the shell 120 of rigid plastic material and therefore the radial stiffness of the ball joint 110 is determined by the stiffness of the shell 120, whereas in the axial direction the interface between the head 114 and the socket 116 is formed by the cylindrical surfaces 132 and 122 of the head 114 and of the shell 120 and therefore the axial stiffness of the ball joint 110 is determined by the controlled interference value between the outer diameter of the head 114 and the inner diameter of the shell 120 and by the resulting friction coefficient between the contact surfaces 132 and 122 of these two components. The radial stiffness of the ball joint is therefore higher than the axial stiffness.

Since the link rod can slide axially in the cylindrical hole 148 of the pin 112 before being locked by tightening of the clamp portion 158, the whole machining and assembly tolerance chain of the unit in which the ball joint 110 is fitted can be taken up also in this case.

On the other hand, the permanent deformations produced during the running-in and the adjustment of the unit in which the ball joint 110 is fitted and the temporary deformations due to the thermal expansions are absorbed by the axial displacement of the head 114 relative to the shell 120, which is controlled by the value of the interference between the coupling surfaces 132 and 122 of these two components. In this connection, the cylindrical surface 132 of the head 114 contacting the cylindrical surface 122 of the shell 120 must have a roughness degree which is low enough to limit the wear level of the cylindrical surface of the shell caused by the relative movement between the two components.

Also with a ball joint according to this second embodiment, the radial and axial stiffnesses can therefore be set on a predetermined value at the design stage, by acting on the plastic material of the shell and on the interference between the coupling cylindrical surfaces of the head and of the shell, respectively.

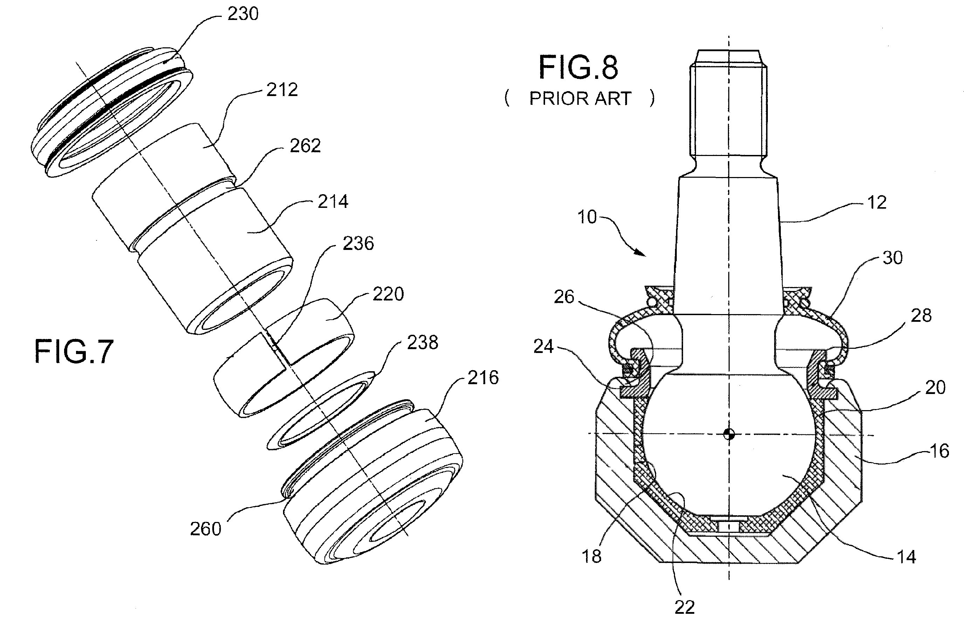

A third preferred embodiment of the present invention is illustrated in Figures 6 and 7, in which parts and elements identical or corresponding to those of Figures 3 and 4 have been given the same reference numerals, increased by 100.

This third embodiment will no more be described in detail, as it is conceptually very similar to the second embodiment described above. The ball joint 210 of Figures 6 and 7 differs in fact from the ball joint 110 of Figures 3 and 4 substantially in that it is not provided with the bush 142. Therefore, in this case the spherical seat coupled with the outer lateral surface 234 of the shell 220 of rigid plastic material in the shape of a spherical sector is wholly formed by the inner lateral surface 219 of the socket 216 in the shape of a spherical sector.

In order to accommodate the shell 220 inside the socket 216, the insertion hole of the cavity 218 of the socket 216 must have a smaller diameter than that of the spherical seat 219. Accordingly, in order to allow the insertion into the cavity 218 of the socket 216, the shell 220 has a longitudinal notch 236 which extends all over the height of the shell and allows to reduce elastically the diameter of the shell 220.

In this third embodiment, the protection guard 230 is secured to the socket 216 by engagement in a groove 260 machined on the outer surface of the socket 216. The protection guard 230 is also secured to the pin 212 by engagement of an upper edge thereof in a circumferential groove 262 provided on the outer lateral surface of the pin 212.

Like in the second embodiment, also in this case the head 214 is fitted with controlled interference into the cylindrical seat of the shell 220. The force-fit of the head 214 into the shell 220 is carried out upon insertion of this latter into the cavity 218 of the socket 216. Moreover, also in this embodiment the cylindrical lateral surface 132 of the head 214 directly contacting the cylindrical inner lateral surface 222 of the shell 220 must have a suitable roughness degree to limit the wear of the inner surface 222 of the shell 220 caused by the relative movement between the two components.

By virtue of such a structure, also the ball joint 210 of Figures 6 and 7 has a high radial stiffness and at the same time is capable of absorbing, due to the possibility of relative movement between the head 214 of the pin 212 and the shell 220, the permanent deformations produced during the running-in and the adjustment of the unit in which the ball joint is fitted and the temporary ones due to thermal expansions in use. It is therefore possible to define, at the design stage, the radial and axial stiffnesses of the ball joint, by acting on the plastic material of the shell 220 and on the value of the interference between the head 214 and the shell 220, respectively.

Furthermore, also in this case the pin 212 has a cylindrical hole 148 intended to receive a link rod and a clamp portion 258 by means of which the link rod can be clamped in the hole 248. The link rod can thus be first caused to slide in the hole 248, in order to take up the whole tolerance chain of the unit in which the ball joint 210 is fitted, and finally locked in the desired position.

Naturally, the principle of the invention remaining unchanged, the embodiments and constructional details may vary widely with respect to those described and illustrated purely by way ofnon-limiting example.

## Claims

1. Ball joint (10; 110; 210), in particular for use on a motor vehicle, comprising
a pin (12; 112; 212) provided at one of its ends with a head (14; 114; 214) having an outer surface (32; 132; 232);
a socket (16; 116; 216) having an open cavity (18; 118; 218); and
a shell (20; 120; 220) accommodated in the cavity (18; 118; 218) of the socket (16; 116; 216) and having an inner cavity into which the head (14; 114; 214) of the pin (12; 112; 212) is inserted, said inner cavity having an inner surface (22; 122; 222) the shape of which corresponds to that of the outer surface (32; 132; 232) of the head (14; 114; 214) of the pin (12; 112; 212);
wherein the head (14; 114; 214) of the pin (12; 112; 212), the cavity (18; 118; 218) of the socket (16; 116; 216) and the shell (20; 120; 220) are configured in such manner that they allow a relative rotational movement between the head (14; 114; 214) and the socket (16; 116; 216) about an axis;
**characterized in that** its axial stiffness is independent from its radial stiffness by virtue of the structure of the shell (20; 120; 220) and of the mounting of this with respect to the socket (16; 116; 216) and to the head (14; 114; 214) of the pin (12; 112; 212).

2. Ball joint (10; 110; 210) according to Claim 1, having an axial stiffness lower than the radial stiffness so as to exhibit a substantially compliant behaviour under axial loads acting on the pin (12; 112; 212) and a substantially rigid behaviour under radial loads acting on the pin (12; 112; 212).

3. Ball joint (10) according to Claim 1 or Claim 2, wherein the outer surface (32) of the head (14) of the pin (12) and the inner surface (22) of the shell (20) are shaped as a spherical sector and wherein the shell (20) has an outer surface (34) of cylindrical shape.

4. Ball joint (10) according to Claims 2 and 3, wherein the shell (20) is mounted without force-fit in the cavity (18) of the socket (16), wherein the joint further comprises a pair of lower and upper retaining elements (38, 44), respectively, for axially retaining the shell (20) in the cavity (18) of the socket (16) downwards and upwards, respectively, and
wherein said retaining elements (38, 44) are made of a material which is less rigid than that of the shell (20).

5. Ball joint (10) according to Claim 4, wherein both the shell (20) and the retaining elements (38, 44) are made of plastic material.

6. Ball joint (10) according to Claim 4 or Claim 5, wherein the lower retaining element (38) is formed by a washer axially interposed between the shell (20) and the bottom of the socket (16) and wherein the upper retaining element (44) is formed by a lower edge of a bush element (42).

7. Ball joint (10) according to Claim 6, wherein the bush element (42) is arranged coaxially with the pin (12) and is axially retained in the socket (16) by means of a locking ring (46).

8. Ball joint (10) according to Claim 7, wherein the locking ring (46) is retained in the socket (16) by means of a retaining lip (26) obtained by plastically bending an end edge of the socket (16).

9. Ball joint (110; 210) according to Claim 1 or Claim 2, wherein the outer surface (132; 232) of the head (114; 214) of the pin (112; 212) and the inner surface (122; 222) of the shell (120; 220) are of cylindrical shape and wherein the shell (120; 220) has an outer surface (134; 234) in the shape of a spherical sector.

10. Ball joint (110; 210) according to Claims 2 and 9, wherein the head (114; 214) of the pin (112; 212) is force-fitted in the inner cavity of the shell (120; 220).

11. Ball joint (110) according to Claim 9 or Claim 10, further comprising a bush element (142) arranged coaxially with the pin (112) and secured to the socket (116), wherein the outer surface (132) of the shell (120) is coupled in part with a first inner lateral surface (143) in the shape of a spherical sector formed by the bush element (142) and in part with a second inner lateral surface (119) in the shape of a spherical sector formed by the cavity (118) of the socket (116).

12. Ball joint (110) according to Claim 11, wherein said first and second inner lateral surfaces (143, 119) are seamlessly arranged over each other and have the same curvature centre.

13. Ball joint according to Claim 11 or Claim 12, wherein the bush element (142) forms outwardly an annular retaining edge (146) and is retrained in the socket (116) by means of a retaining lip (126) obtained by plastically bending an end edge of the socket (116).

14. Ball joint (210) according to Claim 9 or Claim 10, wherein the outer surface (232) of the shell (220) is coupled with an inner lateral surface (219) in the shape of a spherical sector wholly formed by the cavity (218) of the socket (216).

15. Ball joint (210) according to Claim 14, wherein the shell (220) has a longitudinal notch (236) extending all over the height of the shell.

16. Ball joint (110; 210) according to any one of Claims 9 to 15, further comprising a washer (138; 238) of low-stiffness material axially interposed between the head (114; 214) of the pin (112; 212) and the bottom of the socket (116; 216).

17. Ball joint (10; 110; 210) according to any one of the preceding claims, wherein the pin (12; 112; 212) has, on the opposite side with respect to the head (14; 114; 214), a hole (48; 148; 248) for receiving a link rod (50) and is also provided with clamping means (58; 158; 258) for locking the link rod (50) in a given axial position in the hole (48; 148; 248).

18. Ball joint (10; 110; 210) according to Claim 17, wherein said clamping means (58; 158; 258) are formed by a clamp portion which can be tightened by screw fastening means.

19. Ball joint (10; 110; 210) according to any one of the preceding claims, further comprising a protection guard (30; 130; 230) secured at a first end portion thereof to the pin (12; 112; 212) and at a second end portion thereof to the socket (16; 116; 216).

20. Ball joint (10; 110; 210) according to Claim 19, wherein the pin (12; 112; 212) has a circumferential grove (62) which is provided on its outer lateral surface and in which said first end portion of the protection guard (30; 130; 230) engages.

21. Ball joint (10; 110) according to Claim 19 or Claim 20 and according to any one of Claims 6 to 8 or of Claims 11 to 13, wherein the bush element (42; 142) forms a retaining lip (28; 128) projecting from the socket (16; 116) and wherein said second end portion of the protection guard (30; 130) is retained by said retaining lip (28; 128).

22. Ball joint (210) according to Claim 19 or Claim 20, wherein the socket (216) has on its outer surface a groove (260) in which said second end portion of the protection guard (230) engages.

23. Ball joint (10; 110; 210) according to any one of the preceding claims, wherein the shell (20; 120; 220) is made of a rigid plastic material.

24. Ball joint (10; 110; 210) according to any one of the preceding claims, wherein the head (14; 114; 214) and the socket (16; 116; 216) are made of metal.

25. Ball joint (10; 110; 210) according to any one of the preceding claims, wherein the head (14; 114; 214) and the pin (12; 112; 212) are made as a single piece.
